# EUROPEAN PATENT APPLICATION

(11) **EP 4 358 211 A1**
(43) Date of publication of application: **24.04.2024**
(21) Application number: 23199328.8
(22) Date of filing: 25.09.2023
(51) Int. Cl.: H01M 10/04, H01M 10/0587, H01M 50/103, H01M 10/052

(54) **BATTERY**

(30) Priority: 21.10.2022 JP 2022169367
(71) Applicant: Prime Planet Energy & Solutions, Inc., Chuo-ku Tokyo 103-0022 (JP)
(72) Inventor: WATANABE, Daiki, Tokyo, 103-0022 (JP); MAEDA, Tomonori, Tokyo, 103-0022 (JP)
(74) Representative: Kuhnen & Wacker Patent- und Rechtsanwaltsbüro PartG mbB

(57) **Abstract**

Regarding a herein disclosed battery 100, on each of a first electrode assembly 20a and a second electrode assembly 20b, a positive electrode winding-start end part 22s includes a first area A1 elongating along a flat part 20f, and a negative electrode winding-start end part 24s includes a second area A2 elongating along the flat part 20f, a folding part 24m being folded from an end part of the second area A2, and a third area A3 elongating from an end part of the folding part 24m along the flat part 20f. An electrode starting-end laminate part 28 is provided where the first area A1, the second area A2, and the third area A3 are overlapped in a thickness direction X. An electrode starting-end laminate part 28a₁ of the first electrode assembly and an electrode starting-end laminate part 28a₂ of the second electrode assembly are arranged to pass through a wound axis WLi of the first electrode assembly and a wound axis WL₂ of the second electrode assembly, and mutually arranged at different sides with respect to a surface S being along a wound axis WLi of the first electrode assembly and a wound axis WL₂ of the second electrode assembly.

## Description

### BACKGROUND OF THE DUSCKISURE

### 1. Technical Field

The present disclosure relates to a battery.

### 2. Description of Background

For example, Japanese Patent Application Publication No. 2022-127948 discloses a secondary battery including a wound electrode assembly formed in a flat shape in which a positive electrode plate and a negative electrode plate are wound via a separator, and including a battery case configured to accommodate the wound electrode assembly.

### SAMMARY

Anyway, recently, in order to implement making the battery have a high capacity, it tends to accommodate plural wound electrode assemblies inside the battery case. Then, based on an examination of the present inventor, it has been understood regarding a battery described above from a perspective of enhancing a reliability of the battery that still there is a room for improving the battery.

A herein disclosed battery is a battery that includes a first electrode assembly and a second electrode assembly, each being a flat shaped wound electrode assembly in which a positive electrode and a negative electrode are wound via a separator, and includes a battery case configured to accommodate the first electrode assembly and the second electrode assembly. Each of the first electrode assembly and the second electrode assembly includes a pair of bent parts, each having an outer surface being bent, and includes a flat part configured to couple the pair of bent parts. A positive electrode winding-start end part includes a first area elongating along the flat part. A negative electrode winding-start end part includes a second area elongating along the flat part, a folding part being folded from an end part of the second area, and a third area elongating from an end part of the folding part along the flat part. An electrode starting-end laminate part is provided where the first area, the second area, and the third area are overlapped in a thickness direction reaching from one flat surface of the wound electrode assembly to the other flat surface. The electrode starting-end laminate part of the first electrode assembly and the electrode starting-end laminate part of the second electrode assembly are arranged to pass through a wound axis of the first electrode assembly and a wound axis of the second electrode assembly, and mutually arranged at different sides with respect to a surface being along the wound axis of the first electrode assembly and the wound axis of the second electrode assembly. Although details will be described later, it is possible in accordance with such a configuration to suitably enhance a reliability of the battery including plural wound electrode assemblies.

### BRIEF DESCRIPTION OF THE DRAWINGS

FIG. 1 is a perspective view that schematically shows a battery in accordance with one embodiment.
FIG. 2 is a longitudinal cross section view that is schematically shown along a II-II line of FIG. 1.
FIG. 3 is a lateral cross section view that is schematically shown along a III-III line of FIG. 1.
FIG. 4 is a longitudinal cross section view that is schematically shown along a IV-IV line of FIG. 2.
FIG. 5 is a schematic view that shows a configuration of a wound electrode assembly in accordance with one embodiment.
FIG. 6 is a schematic view that shows the wound electrode assembly in accordance with one embodiment.
FIG. 7 is a schematic view that shows a configuration of a cross section of the wound electrode assembly of FIG. 3.
FIG. 8 is an explanation view that is for explaining an electrode starting-end laminate part of the wound electrode assembly of FIG. 7.
FIG. 9 is an enlarged view that schematically shows a boundary between a positive electrode, a negative electrode, and a separator in accordance with one embodiment.
FIG. 10 is an explanation view that is for explaining an arrangement position of the electrode starting-end laminate part in accordance with one embodiment.
FIG. 11 is an explanation view that is for explaining an arrangement position of a winding-end tape in accordance with another embodiment.
FIG. 12 is an explanation view that is for explaining the arrangement position of the winding-end tape in accordance with another embodiment.
FIG. 13 is a FIG. 10 corresponding diagram in accordance with another embodiment.

### DERAILED DESCRIPTION

Below, while referring to drawings, some of preferred embodiments for a herein disclosed technique will be explained. Incidentally, the matters other than matters particularly mentioned in this specification, and required for practicing the present disclosure (for example, a general configuration and manufacturing process for the battery by which the present disclosure is not characterized) can be grasped as design matters of those skilled in the art based on the conventional technique in the present field. The present disclosure can be executed based on the contents disclosed in the present specification, and the technical common sense in the present field. In addition, it is not intended, of course, that embodiments explained here particularly restricts the present disclosure. In addition, a wording "A to B" representing a range in the present specification semantically covers not only a meaning equal to or more than A and not more than B, but also meanings "more than A" and "less than B".

Incidentally, in the present specification, the "battery" is a term widely denoting an electric storage device from which an electric energy can be taken out, and is a concept containing the primary battery and the secondary battery. In addition, in the present specification, the "secondary battery" represents a general electric storage device that can be repeatedly charged and discharged by making charge carriers move between a positive electrode and a negative electrode via an electrolyte. The electrolyte might be a liquid-type electrolyte (electrolytic solution), gel-type electrolyte, or a solid-type electrolyte. The secondary battery described above semantically covers not only a so-called storage battery (chemical battery), such as lithium ion secondary battery and nickel hydrogen battery, but also a capacitor (physical battery), such as electric double layer capacitor, or the like. Below, embodiments will be described in a case where the lithium ion secondary battery is treated as a target.

### <Configuration of Battery>

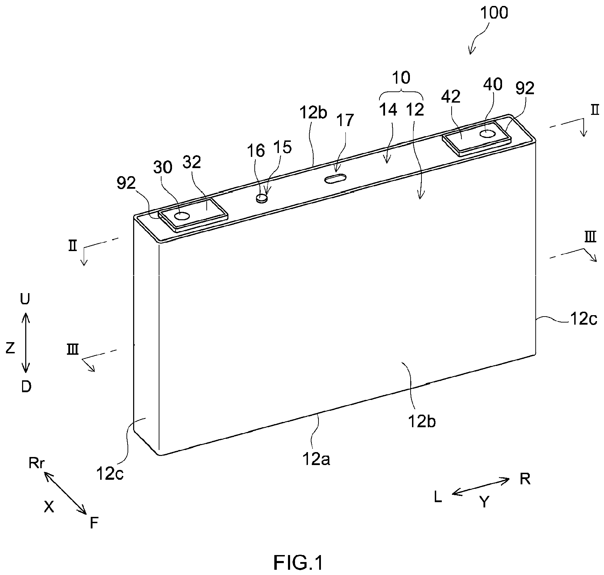

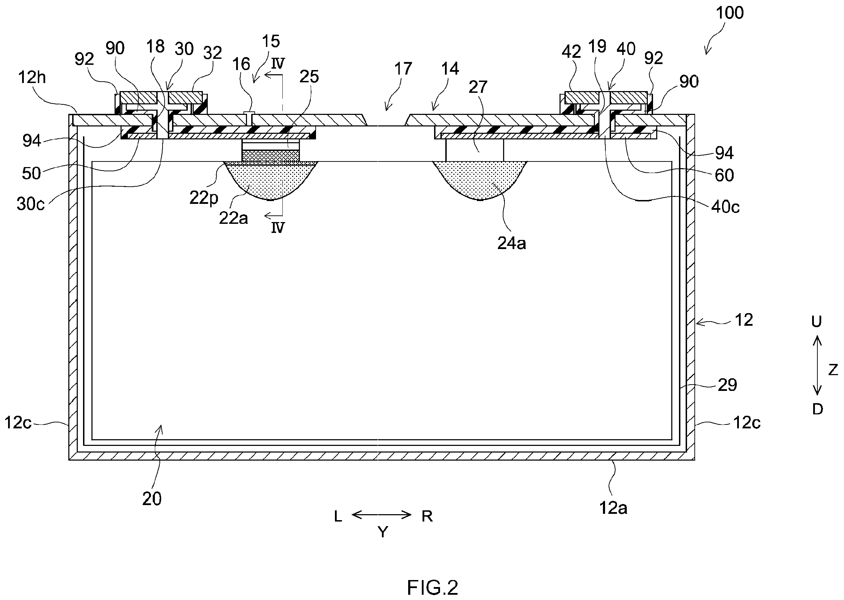

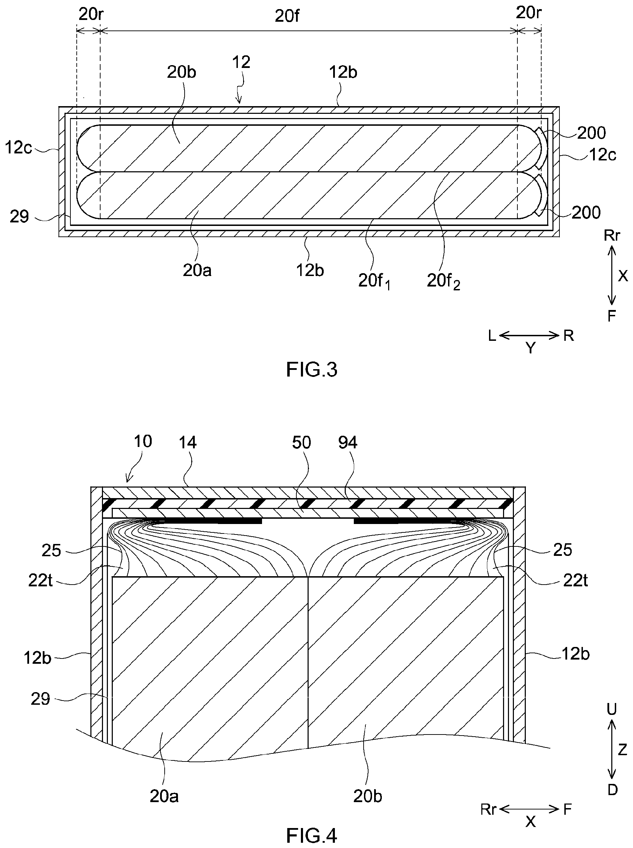

FIG. 1 is a perspective view that schematically shows a battery 100 in accordance with the present embodiment. It is preferable that the battery 100 is a secondary battery, and it is further preferable that the battery is, for example, a nonaqueous electrolyte secondary battery, such as lithium ion secondary battery. FIG. 2 is a longitudinal cross section view that is schematically shown along a II-II line of FIG. 1. FIG. 3 is a lateral cross section view that is schematically shown along a III-III line of FIG. 1. FIG. 4 is a longitudinal cross section view that is schematically shown along a IV-IV line of FIG. 2. Incidentally, in explanation described below, reference signs L, R, F, Rr, U, and D in figures respectively represent left, right, front, rear, up, and down. Additionally, in the figures, a reference sign X represents a short side direction of the battery 100, a reference sign Y represents a long side direction of the battery 100, and a reference sign Z represents a vertical direction of the battery 100. However, these are merely directions for convenience sake of explanation, which never restrict the disposed form of the battery 100. In addition, the explanation described below might refer to all of a first electrode assembly 20a and a second electrode assembly 20b together as an electrode assembly 20.

As shown in FIG. 1 to FIG. 3, the battery 100 includes a battery case 10 (see FIG. 1), plural electrode assemblies 20 (see FIG. 2 and FIG. 3), a positive electrode terminal 30 (see FIG. 1 and FIG. 2), a negative electrode terminal 40 (see FIG. 1 and FIG. 2), a positive electrode collecting part 50 (see FIG. 2), and a negative electrode collecting part 60 (see FIG. 2). As the illustration is omitted, the battery 100 further includes an electrolytic solution. The battery 100 is a nonaqueous electrolytic solution secondary battery. Below, a particular configuration of the battery 100 will be described.

The battery case 10 is a housing configured to accommodate the electrode assembly 20. As shown in FIG. 1, the battery case 10 herein has an outer appearance that is formed in a flat and bottomed rectangular parallelopiped shape (square shape). However, in another embodiment, the outer appearance of the battery case 10 might be a different shape, such as cylindrical shape. In addition, it is possible as the housing to use a laminate type case. As shown in FIG. 2, the battery case 10 includes an outer package 12 having an opening 12h and includes a sealing plate (lid body) 14 configured to seal the opening 12h. A material of the battery case 10 (outer package 12 and sealing plate 14) might be the same as a material conventionally used, and is not particularly restricted. It is preferable that the battery case 10 is made of metal, and it is more preferable that, for example, the battery case is made of aluminum, aluminum alloy, iron, iron alloy, or the like. The outer package 12 and the sealing plate 14, which configure the battery case 10, might be made from the same material or might be made respectively from different materials. Each of the outer package 12 and the sealing plate 14 has a volume based on an accommodated number of the electrode assemblies 20, a size, or the like.

The outer package 12 is, as shown in FIG. 1 and FIG. 2, a container that has the opening 12h at the upper surface and that is formed in a bottomed square shape. The outer package 12 is configured, as shown in FIG. 1, to include a bottom wall 12a, a pair of longer side walls 12b extending upward from long sides of the a bottom wall 12a and being opposed mutually, and a pair of shorter side walls 12c extending upward from short sides of the bottom wall 12a and being opposed mutually. The longer side wall 12b and the shorter side wall 12c are respectively an example of a first side wall disclosed herein and an example of a second side wall disclosed herein. An area size of the longer side wall 12b is larger than an area size of the shorter side wall 12c. The bottom wall 12a is formed in an approximately rectangular shape. The bottom wall 12a is opposed to the opening 12h (see FIG. 2). The longer side wall 12b and the shorter side wall 12c are examples of "side wall". The sealing plate 14 is a plate-shaped member formed in a flat surface approximately rectangular shape, which is attached to the outer package 12 so as to cover the opening 12h of the outer package 12. The sealing plate 14 is opposed to the bottom wall 12a of the outer package 12. The sealing plate 14 is formed in an approximately rectangular shape. The battery case 10 is integrated by making the sealing plate 14 be joined (for example, welded and joined) to a peripheral edge of the opening 12h of the outer package 12. By doing this, the battery case 10 is airtightly sealed (hermetically sealed).

As shown in FIG. 2, the sealing plate 14 is provided with a liquid injection hole 15, a gas exhaust valve 17, and terminal taking out holes 18, 19. The liquid injection hole 15 is a penetration hole that is configured for injecting the electrolytic solution to an inside of the battery case 10 after the sealing plate 14 is assembled to the outer package 12. The liquid injection hole 15 is sealed by a sealing member 16 after the liquid injection of the electrolytic solution. The gas exhaust valve 17 is a thin-walled part that is configured to be broken when a pressure inside the battery case 10 becomes equal to or more than a predetermined value, so as to exhaust the gas inside the battery case 10 to an outside.

As the electrolytic solution, one utilized for a conventionally known battery can be used without particular restriction. As one example, it is possible to use a nonaqueous electrolytic solution in which a supporting salt is dissolved into a nonaqueous type solvent. As one example of the nonaqueous type solvent, it is possible to use a carbonate type solvent, such as ethylene carbonate, dimethyl carbonate, and ethyl methyl carbonate. As one example of the supporting salt, it is possible to use a fluorine-containing lithium salt, such as LiPF₆. The electrolytic solution might contain an additive agent, as needed.

The positive electrode terminal 30 is attached to one of the end parts (left end part in FIG. 1 and FIG. 2) in a long side direction Y of the sealing plate 14. The negative electrode terminal 40 is attached to the other one of the end parts (right end part in FIG. 1 and FIG. 2) in the long side direction Y of the sealing plate 14. The positive electrode terminal 30 and the negative electrode terminal 40 are respectively inserted into the terminal taking out holes 18, 19 and are configured to be exposed to a surface at an outer side of the sealing plate 14. The positive electrode terminal 30 is electrically connected to a plate-shaped positive electrode outside conductive member 32 at an outer side of the battery case 10. The negative electrode terminal 40 is electrically connected to a plate-shaped negative electrode outside conductive member 42 at the outer side of the battery case 10. The positive electrode outside conductive member 32 and the negative electrode outside conductive member 42 are connected to another secondary battery or an outside equipment via an outside connecting member, such as bus bar. It is preferable that the positive electrode outside conductive member 32 and the negative electrode outside conductive member 42 are configured with a metal outstanding for an electrically conductive property, and they might be configured, for example, with aluminum, aluminum alloy, copper, copper alloy, or the like. However, the positive electrode outside conductive member 32 and the negative electrode outside conductive member 42 are not essential, and might be omitted in another embodiment.

As shown in FIG. 3 and FIG. 4, regarding the battery 100 of the present embodiment, plural (in particular, 2) electrode assemblies 20 are accommodated in the battery case 10. However, the number of the wound electrode assemblies arranged inside one outer package 12, which is not particularly restricted, might be 3 (plural). Although a detailed structure of the electrode assembly 20 will be described later, a positive electrode tab group 25 and a negative electrode tab group 27 protrude, as shown in FIG. 2, to an upper part of the electrode assembly 20. The battery 100 has a so-called upward tab structure in which the positive electrode tab group 25 and the negative electrode tab group 27 are positioned above the electrode assembly 20.

As shown in FIG. 4, the positive electrode tab group 25 is joined to the positive electrode collecting part (positive electrode collecting member) 50 in a state of being bent. In accordance with such a configuration, it is possible to further suitably enhance a volume energy density of the battery 100, and thus it is preferable. As the illustration is omitted, similarly, the negative electrode tab group 27 is joined to the negative electrode collecting part (negative electrode collecting member) 60 in a state of being bent. In addition, it is preferable that the positive electrode tab group 25 is joined to an area where it is arranged along a wall part (preferably, sealing plate 14) of the battery case, on the positive electrode collecting part 50. Similarly, it is preferable that the negative electrode tab group 27 is joined to an area where it is arranged along the wall part (preferably, sealing plate 14) of the battery case, on the negative electrode collecting part 60.

The positive electrode collecting part 50 is configured to electrically connect the positive electrode tab group 25 of the electrode assembly 20 and the positive electrode terminal 30. The positive electrode collecting part 50 is, as shown in FIG. 2, a plate-shaped conductive member that extends in the long side direction Y along an inner side surface of the sealing plate 14. One end part (right side in FIG. 2) of the positive electrode collecting part 50 is electrically connected to the positive electrode tab group 25. The other end part (left side in FIG. 2) of the positive electrode collecting part 50 is electrically connected to a lower end part 30c of the positive electrode terminal 30. It is preferable that the positive electrode terminal 30 and the positive electrode collecting part 50 are configured with metal outstanding for electrical conductivity, and might be configured with, for example, aluminum or aluminum alloy.

The negative electrode collecting part 60 is configured to electrically connect the negative electrode tab group 27 of the electrode assembly 20 and the negative electrode terminal 40. The negative electrode collecting part 60 is, as shown in FIG. 2, a plate-shaped conductive member that extends in the long side direction Y along the inner side surface of the sealing plate 14. One end part (left side in FIG. 2) of the negative electrode collecting part 60 is electrically connected to the negative electrode tab group 27. The other end part (right side in FIG. 2) of the negative electrode collecting part 60 is electrically connected to a lower end part 40c of the negative electrode terminal 40. It is preferable that the negative electrode terminal 40 and the negative electrode collecting part 60 are configured with metal outstanding for electrical conductivity, and might be configured with, for example, copper or copper alloy.

Regarding the battery 100, in order to inhibit conduction between the electrode assembly 20 and the battery case 10, various insulating members are used. For example, as shown in FIG. 1, the positive electrode outside conductive member 32 and the negative electrode outside conductive member 42 are insulated by an outside insulating member 92 from the sealing plate 14. In addition, as shown in FIG. 2, a gasket 90 is attached to each of the terminal taking out holes 18, 19 of the sealing plate 14. By doing this, it is possible to inhibit the positive electrode terminal 30 and the negative electrode terminal 40, which are inserted into the terminal taking out holes 18, 19, from becoming conductive with the sealing plate 14. In addition, an inside insulating member 94 is arranged between the positive electrode collecting part 50 and negative electrode collecting part 60, and an inner surface side of the sealing plate 14. By doing this, it is possible to inhibit the positive electrode collecting part 50 and the negative electrode collecting part 60 from becoming conductive with the sealing plate 14. Incidentally, the inside insulating member 94 might include a protruding part that protrudes toward the electrode assembly 20.

Furthermore, the plural electrode assemblies 20 are arranged inside the outer package 12 in a state of being covered with an electrode assembly holder 29 (see FIG. 3) that consists of a resin sheet having an insulating property. By doing this, it is possible to inhibit the electrode assembly 20 from directly coming into contact with the outer package 12. Incidentally, a material of each insulating member described above is not particularly restricted, if a predetermined insulating property is implemented. As one example of the above described material, it is possible to use a synthetic resin material that is a polyolefin resin, such as polypropylene (PP) and polyethylene (PE), a fluorine type resin, such as perfluoro alkoxy alkane and polytetrafluoroethylene (PTFE), or the like.

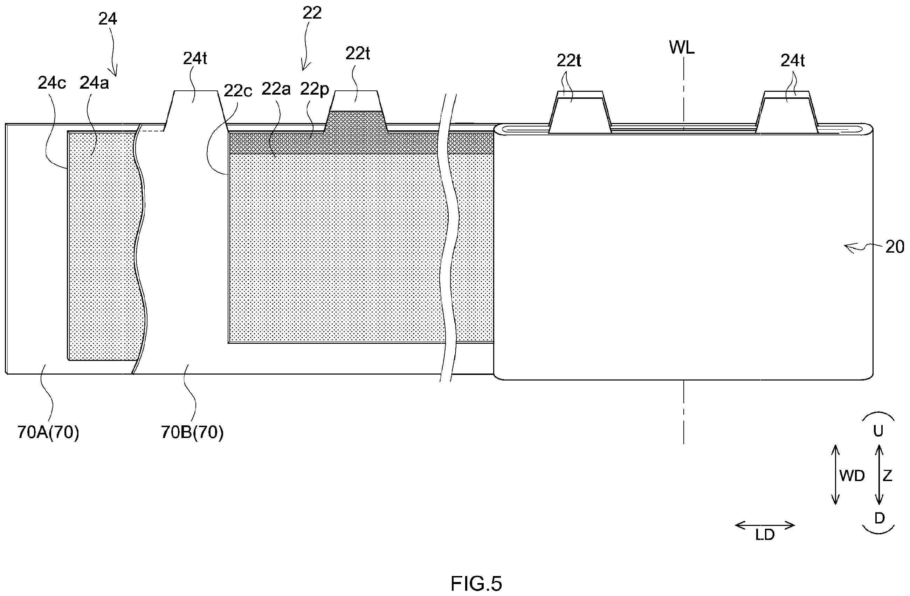

FIG. 5 is a schematic view that shows a configuration of the electrode assembly 20. As shown in FIG. 5, the electrode assembly 20 is configured by laminating a positive electrode 22 formed in a strip-like shape and a negative electrode 24 formed in a strip-like shape via two separators 70 formed in strip-like shapes (first separator 70A, and second separator 70B) in a state of being insulated, and then by winding the resultant in a longitudinal direction with a wound axis WL treated as the center. Incidentally, a reference sign LD in FIG. 5, or the like, represents a longitudinal direction (in other words, carrying direction) of the electrode assembly 20 and the separator 70, each of which is manufactured in a strip-like shape. A reference sign WD represents a wound axis direction (which might be referred to as width direction) of the electrode assembly 20 and the separator 70, which is a direction approximately orthogonal to the longitudinal direction LD. The wound axis direction WD is approximately parallel to a vertical direction Z of the above described battery 100.

An outer appearance of the electrode assembly 20 herein is a flat shape. It is preferable that the electrode assembly 20 is formed in the flat shape. The electrode assembly 20 formed in the flat shape can be made, for example, by performing a press mold on an electrode assembly wound in a cylindrical shape (cylindrical body) so as to make the electrode assembly be flat. The electrode assembly 20 formed in the flat shape, as shown in FIG. 3, includes a pair of bent parts 20r, an outer surface of each bent part being bent, and includes a pair of flat parts 20f configured to couple the pair of bent parts 20r, an outer surface of each flat part being flat. The flat part 20f might not be formed in a strict flat, and might be formed, for example, in a slight step shape or a slight concave and convex shape.

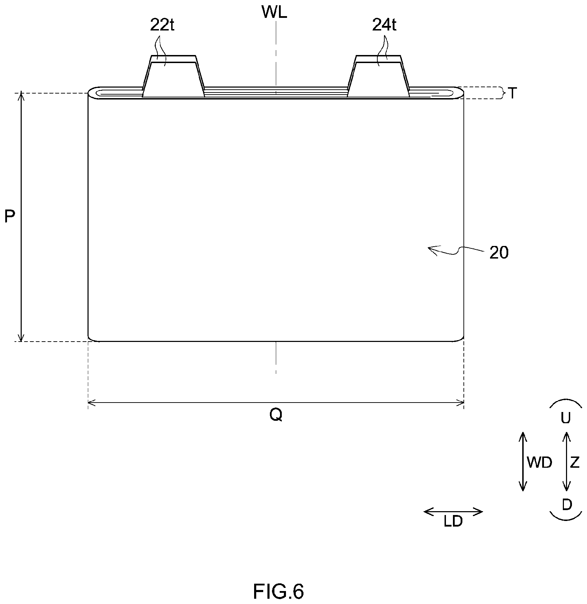

FIG. 6 is a schematic view that shows the electrode assembly 20 (wound electrode assembly). A reference sign P in FIG. 6 represents a height of the electrode assembly 20 (in other words, a length in a direction along the wound axis WL of the electrode assembly 20, which might be referred to as a length in a direction connecting the bottom wall 12a of the outer package 12 and the sealing plate 14). In addition, a reference sign Q in FIG. 6 represents a width of the electrode assembly 20 (in other words, a length in a direction orthogonal to a thickness direction X of the electrode assembly 20, which might be referred to as a length in a direction connecting a pair of shorter side walls 12c of the outer package 12). Here, a ratio (Q/P) of the width Q of the electrode assembly 20 with respect to the height P of the electrode assembly 20, which is not particularly restricted if the effects of the technique herein disclosed are implemented, is, for example, equal to or more than 2, is preferably equal to or more than 3 from a perspective of improving liquid movement of the electrolytic solution so as to further suitably enhance a high rate characteristic and a rapid charge characteristic, or might be, for example, equal to or more than 4. In addition, an upper limit of the ratio (Q/P) described above, which is not particularly restricted, is, for example, equal to or less than 10, or might be equal to or less than 7, or equal to or less than 5. The height P of the electrode assembly 20 is preferably equal to or more than 5 cm, or might be, for example, equal to or more than 10 cm. In addition, the height P of the electrode assembly 20 is preferably equal to or less than 20 cm, or further preferably equal to or less than 15 cm. The width Q of the electrode assembly 20 is preferably equal to or more than 20 cm, or further preferably equal to or more than 30 cm. In addition, the width Q of the electrode assembly 20 might be, for example, equal to or less than 60 cm, might be equal to or less than 50 cm, or might be equal to or less than 40 cm. However, it is not intended that the present disclosure is restricted to these examples.

A reference sign T in FIG. 6 represents a thickness of the electrode assembly 20. The thickness T of the electrode assembly 20 is, which is not particularly restricted if the effects of the herein disclosed technique are implemented, for example, equal to or more than 1 cm, preferably equal to or more than 1.5 cm from a perspective of further suitably enhancing a volume energy of the battery 100, further preferably equal to or more than 2 cm, or furthermore preferably equal to or more than 3 cm. An upper limit of the thickness T of the electrode assembly 20, which is not particularly restricted, might be, for example, equal to or less than 30 cm, might be equal to or less than 25 cm, or might be equal to or less than 20 cm. However, it is not intended that the present disclosure is restricted to these examples.

In the battery 100, the electrode assembly 20 is accommodated inside the battery case 10 to make the wound axis direction WD approximately coincide with the vertical direction Z. In other words, the battery case 10 has a first surface (here, corresponding to the sealing plate 14) on which the liquid injection hole 15 is formed, and the first electrode assembly 20a and the second electrode assembly 20b are arranged in the battery case 10 so as to make a wound axis WLi of the first electrode assembly and a wound axis WL₂ of the second electrode assembly be respectively arranged in directions perpendicular to the sealing plate 14. Alternatively, it can be said that they are arranged inside the battery case 10 so as to make the wound axis WLi of the first electrode assembly and the wound axis WL₂ of the second electrode assembly be arranged in the same direction. In addition, it can be said that they are arranged so as to make the flat part 20f of the first electrode assembly 20a and the flat part 20f of the second electrode assembly 20b be aligned in the thickness direction (X direction in FIG. 3) of the battery 100. As described above, by applying the configuration in which the wound electrode assembly is opened at the upper and lower portions, it is possible to suitably shorten an impregnation time of the electrolytic solution, and thus it is preferable from a perspective of a battery characteristic. As shown in FIG. 3, the pair of bent parts 20r are arranged to be opposed to the pair of shorter side walls 12c of the outer package 12. The pair of flat parts 20f are arranged to be opposed to longer side walls 12b of the outer package 12. The end surfaces of the electrode assembly 20 (in other words, laminate surface on which the positive electrode 22 and the negative electrode 24 are laminated, opposite ends in the wound axis direction WD of FIG. 5) are opposed to the bottom wall 12a and the sealing plate 14.

The positive electrode 22 is, as shown in FIG. 5, a member formed in a strip-like shape. The positive electrode 22 includes a positive electrode collecting body 22c formed in a strip-like shape, and includes a positive electrode active material layer 22a and a positive electrode protective layer 22p which are fixed on at least one surface of the positive electrode collecting body 22c. It is preferable from a perspective of battery performance that the positive electrode active material layer 22a is formed on both surfaces of the positive electrode collecting body 22c.

For each of members configuring the positive electrode 22, it is possible to use a conventionally known material which can be utilized for a general battery (for example, lithium ion secondary battery), without particular restriction. For example, it is preferable that the positive electrode collecting body 22c is made from an electrically conductive metal, such as aluminum, aluminum alloy, nickel, and stainless steel, and the positive electrode collecting body herein is a metal foil, in particular, an aluminum foil. A thickness of the positive electrode collecting body 22c is preferably 5 µm to 30 µm, or further preferably 8 µm to 25 µm.

The positive electrode 22 includes, as shown in FIG. 5, plural positive electrode tabs 22t that protrude toward an outer side (upper side in FIG. 5) from one end side in the wound axis direction WD. The plural positive electrode tabs 22t are provided to be spaced away from each other by a predetermined interval (intermittently) along the longitudinal direction LD. The positive electrode tab 22t herein is a part of the positive electrode 22. The positive electrode tab 22t is an area where the positive electrode active material layer 22a is not formed. On a part of the positive electrode tab 22t herein, the positive electrode protective layer 22p is provided. However, the positive electrode tab 22t might not be provided with the positive electrode protective layer 22p. On at least a part of the positive electrode tab 22t, the positive electrode collecting body 22c is exposed. The positive electrode tab 22t might be a member different from the positive electrode 22.

The plural positive electrode tabs 22t each is herein formed in a trapezoidal shape. However, a shape of the positive electrode tab 22t is not restricted to that example. In addition, sizes of the plural positive electrode tabs 22t are not particularly restricted. The shape or size of the positive electrode tab 22t can be suitably adjusted, for example, in consideration of a state of being connected to the positive electrode collecting part 50, and based on a formed position, or the like. The plural positive electrode tabs 22t are laminated at one of the end parts (top end part in FIG. 5) in the wound axis direction WD of the positive electrode 22, so as to configure the positive electrode tab group 25 (see FIG. 2).

The positive electrode active material layer 22a is, as shown in FIG. 5, provided in a strip-like shape along the longitudinal direction LD of the positive electrode collecting body 22c. A width of the positive electrode active material layer 22a (length in the wound axis direction WD, and this meaning is similarly used, below) is smaller than a width of the negative electrode active material layer 24a. The positive electrode active material layer 22a contains a positive electrode active material that can reversibly store and release a charge carrier. The positive electrode active material is preferably a lithium transition metal composite oxide, or further preferably one containing at least one of Ni (nickel) and Co (cobalt) even among the lithium transition metal composite oxides. As one example of the lithium transition metal composite oxide described above, it is possible to use a lithium-nickel-cobalt-manganese composite oxide. When a total solid content of the positive electrode active material layer 22a is treated as 100 mass%, the positive electrode active material might occupy approximately 80 mass% or more, typically 90 mass% or more, or, for example, 95 mass% or more. The positive electrode active material layer 22a might contain an arbitrary component other than the positive electrode active material, for example, various additive components, such as binder and electrically conducting material, or the like. It is preferable that the positive electrode active material layer 22a contains the binder and the electrically conducting material, in addition to the positive electrode active material. The binder is, typically, made of resin, and it is preferable to use a fluorine type resin, such as polyvinylidene fluoride (PVdF), even among the resins. As the electrically conducting material, it is preferable to use a carbon material, such as acetylene black (AB). In addition, the positive electrode active material layer 22a density is preferably equal to or more than 3.0 g/cm³, or further preferably equal to or more than 3.2 g/cm³. In a case where the density of the positive electrode active material layer 22a is high as described above, the positive electrode collecting body 22c becomes to be further easily broken, and thus it is suitable as the object to which the effect of the herein disclosed technique is applied.

The positive electrode protective layer 22p is a layer whose electrical conduction property is configured to be lower than the positive electrode active material layer 22a. The positive electrode protective layer 22p is, as shown in FIG. 5, provided in a strip-like shape along the longitudinal direction LD of the positive electrode collecting body 22c. The positive electrode protective layer 22p is provided at a boundary portion between the positive electrode collecting body 22c and the positive electrode active material layer 22a in the wound axis direction WD. The positive electrode protective layer 22p herein is provided at one of the end parts in the wound axis direction WD of the positive electrode collecting body 22c, in particular, an end part at a side where the positive electrode tab 22t exists (top end part in FIG. 5). By including the positive electrode protective layer 22p, it is possible to inhibit the battery 100 from suffering an inside short circuit caused in response to direct contact of the positive electrode 22 with the negative electrode active material layer 24a when the separator 70 is broken.

The positive electrode protective layer 22p contains an inorganic filler having an insulating property. As one example of the inorganic filler, it is possible to use a ceramic particle, such as alumina. The positive electrode protective layer 22p might contain an arbitrary component other than the inorganic filler, for example, various additive components, such as binder and electrically conducting material, or the like. The binder and the electrically conducting material might be the same as those ones which are illustrated to be able to be contained in the positive electrode active material layer 22a. However, the positive electrode protective layer 22p is not essential, and might be omitted in another embodiment.

The negative electrode 24 is, as shown in FIG. 5, a member formed in a strip-like shape. The negative electrode 24 includes a negative electrode collecting body 24c formed in a strip-like shape, and a negative electrode active material layer 24a fixed on at least one surface of the negative electrode collecting body 24c. It is preferable from a perspective of battery performance that the negative electrode active material layer 24a is formed on both surfaces of the negative electrode collecting body 24c.

As each of members configuring the negative electrode 24, it is possible to use a conventionally known material which can be utilized for a general battery (for example, lithium ion secondary battery), without particular restriction. For example, it is preferable that the negative electrode collecting body 24c is made from an electrically conductive metal, such as copper, copper alloy, nickel, and stainless steel, and the negative electrode collecting body herein is a metal foil, in particular, a copper foil. A thickness of the negative electrode collecting body 24c is preferably 5 µm to 30 µm, or further preferably 8 µm to 25 µm.

The negative electrode 24 includes, as shown in FIG. 5, a negative electrode tab 24t that protrudes toward the outer side (upper side in FIG. 5) from one end side in the wound axis direction WD. Plural negative electrode tabs 24t are provided to be spaced away from each other by a predetermined interval (intermittently) along the longitudinal direction LD. With respect to the wound axis direction WD, the negative electrode tab 24t is provided on an end part at the same side as the positive electrode tab 22t. The negative electrode tab 24t herein is a part of the negative electrode 24. The negative electrode tab 24t herein is an area where the negative electrode active material layer 24a is not formed, and where the negative electrode collecting body 24c is exposed. However, a part of the negative electrode active material layer 24a might protrude to stick the negative electrode tab 24t. In addition, the negative electrode tab 24t might be a member different from the negative electrode 24.

The plural negative electrode tabs 24t each is herein formed in a trapezoidal shape. However, each shape and size of the plural negative electrode tabs 24t can be suitably adjusted, similarly to the positive electrode tab 22t. The plural negative electrode tabs 24t are laminated at one of the end parts (top end part in FIG. 5) in the wound axis direction WD of the negative electrode 24, so as to configure the negative electrode tab group 27 (see FIG. 2).

The negative electrode active material layer 24a is, as shown in FIG. 5, provided in a strip-like shape along the longitudinal direction LD of the negative electrode collecting body 24c. The width of the negative electrode active material layer 24a is larger than the width of the positive electrode active material layer 22a. Incidentally, the width of the negative electrode active material layer 24a means a length in the wound axis direction WD of a portion whose thickness is approximately constant" and it does not include a portion of the negative electrode tab 24t even in a case where, for example, a part of the negative electrode active material layer 24a protrudes to stick the negative electrode tab 24t. The negative electrode active material layer 24a contains a negative electrode active material that can reversibly store and release a charge carrier. It is preferable that the negative electrode active material is, for example, a carbon material, such as graphite, or a silicon material. When a total solid content of the negative electrode active material layer 24a is treated as 100 mass%, the negative electrode active material might occupy approximately 80 mass% or more, typically 90 mass% or more, or, for example, 95 mass% or more. The negative electrode active material layer 24a might contain an arbitrary component other than the negative electrode active material, for example, various additive components, such as binder and electrically conducting material, or the like. It is preferable that the negative electrode active material layer 24a contains the binder in addition to the negative electrode active material. It is preferable that the binder contains rubbers, such as styrene butadiene rubber (SBR), or celluloses, such as carboxymethyl cellulose (CMC). The negative electrode active material layer 24a might contain a carbon material as the electrically conducting material, if needed.

The separator 70 is, as shown in FIG. 5, a member formed in a strip-like shape. The separator 70 is an insulation sheet on which plural fine penetration holes are formed, and charge carriers can pass through the plural fine penetration holes. A width of the separator 70 is larger than the width of the negative electrode active material layer 24a. By arranging the separator 70 between the positive electrode 22 and the negative electrode 24, it is possible to not only inhibit the contact of the positive electrode 22 and the negative electrode 24, but also make the charge carrier (for example, lithium ion) move between the positive electrode 22 and the negative electrode 24. Although not particularly restricted, a thickness of the separator 70 (length in the laminate direction MD, and this meaning is similarly used, below) is preferably equal to or more than 8 µm, or further preferably equal to or more than 10 µm. In addition, the thickness of the separator 70 is preferably equal to or less than 25 µm, further preferably equal to or less than 22 µm, or furthermore preferably equal to or less than 20 µm.

Herein, two separators 70 are used for one electrode assembly 20. Regarding the separator 70, it is preferable that two separators are used for one electrode assembly 20 as shown in the present embodiment, in other words, it is preferable that the first separator 70A and the second separator 70B are included. Two separators might have configurations different from each other, or might have configurations similar to each other.

The separator 70 is a member configured to establish an insulation between the positive electrode active material layer 22a of the positive electrode 22 and the negative electrode active material layer 24a of the negative electrode 24. As the separator 70, it is suitable, for example, to use a porous resin sheet consisting of a polyolefin resin, such as polyethylene (PE) and polypropylene (PP). Incidentally, on a surface of the separator 70, a heat resistance layer (HRL) containing an inorganic filler might be provided. As the inorganic filler, for example, it is possible to use alumina, boehmite, aluminum hydroxide, titania, or the like.

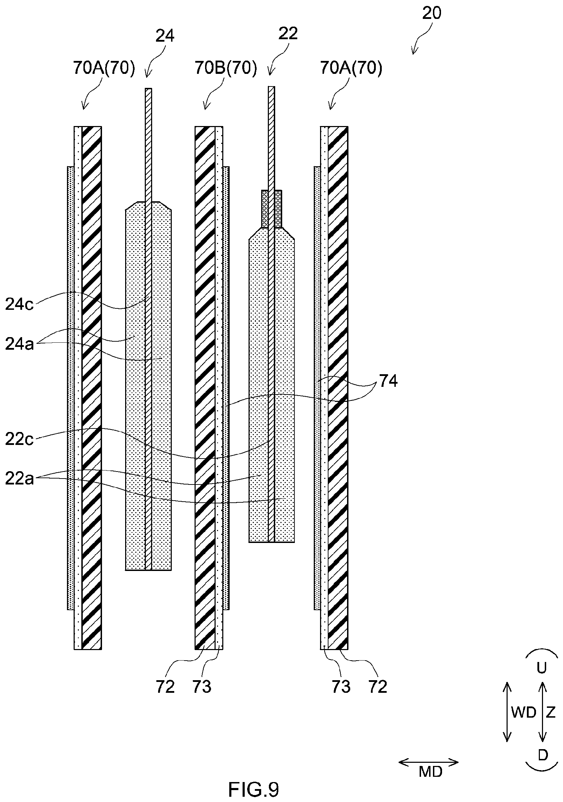

FIG. 9 is an enlarged view that schematically shows a boundary between the positive electrode 22, the negative electrode 24, and the separator 70. As shown in FIG. 9, the separator 70 includes a base material layer 72. As the base material layer 72, it is possible to use a conventionally known fine porous membrane utilized for a separator of a battery, without particular restriction. It is preferable that the base material layer 72 is a porous sheet-shaped member. The base material layer 72 might have a single layer structure, or might have a structure consisting of 2 or more layers, or, for example, 3 layer structure. It is preferable for the base material layer 72 that at least a surface of it opposed to the negative electrode 24 is made from a polyolefin resin. It is further preferable for the base material layer 72 that the whole of it is made from the polyolefin resin. By doing this, it is possible to sufficiently secure a flexibility of the separator 70, and thus to easily implement manufacturing (winding and press molding) the electrode assembly 20. As the polyolefin resin, it is preferable to use polyethylene (PE), polypropylene (PP), or a mixture of them, or it is further preferable to use PE.

Although not particularly restricted, a thickness of the base material layer 72 (length in the laminate direction MD, and this meaning is similarly used, below) is preferably equal to or more than 3 µm, or further preferably equal to or more than 5 µm. In addition, the thickness of the base material layer 72 is preferably equal to or less than 25 µm, further preferably equal to or less than 18 µm, or furthermore preferably equal to or less than 14 µm. An air permeability of the base material layer 72 is preferably 30 sec/100 cc to 500 sec/100 cc, further preferably 30 sec/100 cc to 300 sec/100 cc, or furthermore preferably 50 sec/100 cc to 200 sec/100 cc. The base material layer 72 might have an adhesive property within an extent which implements adhesion with the negative electrode active material layer 24a, for example, by heating, press molding, or the like.

As shown in FIG. 9, the heat resistance layer 73 is provided on the base material layer 72. It is preferable that the heat resistance layer 73 is formed on the base material layer 72. The heat resistance layer 73 might be provided directly on a surface of the base material layer 72, or might be provided via a different layer on the base material layer 72. However, the heat resistance layer 73 is not essential, and might be omitted in another embodiment. The heat resistance layer 73 herein is provided on a whole surface opposed to the positive electrode 22 of the base material layer 72. By doing this, it is possible to further precisely prevent heat shrinkage of the separator 70, and to contribute in enhancing a safety property of the battery 100. The heat resistance layer 73 does not have the adhesive property within the extent which implements adhesion with the positive electrode active material layer 22a, for example, by heating, press molding, or the like. A basis weight of the heat resistance layer 73 herein is homogenous in the longitudinal direction LD of the separator 70 and in the wound axis direction WD. Although not particularly restricted, a thickness of the heat resistance layer 73 (length in the laminate direction MD, and this meaning is similarly used, below) is preferably equal to or more than 0.5 µm, further preferably equal to or more than 1 µm, or furthermore preferably equal to or more than 2 µm. In addition, the thickness of the heat resistance layer 73 is preferably equal to or less than 8 µm, or further preferably equal to or less than 6 µm. It is preferable that the heat resistance layer 73 contains an inorganic filler and a heat resistance layer binder.

As the inorganic filler, it is possible to use conventionally known one utilized for this kind of object, without particular restriction use. It is preferable that the inorganic filler contains a ceramic particle having an insulating property. Particularly, in consideration of a heat resistant property, easily available property, or the like, it is preferable to use an inorganic oxide, such as alumina, zirconia, silica, and titania, a metal hydroxide, such as aluminum hydroxide, or a clay mineral, such as boehmite, or it is further preferable to use alumina or boehmite. In addition, from a perspective of suppressing the heat shrinkage of the separator 70, it is preferable to use a chemical compound particularly containing aluminum. A rate of the inorganic filler with respect to a total mass of the heat resistance layer 73 is preferably equal to or more than 85 mass%, or further preferably equal to or more than 90 mass%, or equal to or more than 95 mass%.

As the heat resistance layer binder, it is possible to use conventionally known one utilized for this kind of object, without particular restriction. As a specific example, it is possible to use acrylic resin, fluorine type resin, epoxy type resin, urethane resin, ethylene-vinyl acetate resin, or the like. Among them, it is preferable to use the acrylic resin.

In a suitable aspect, an adhesion layer 74 is formed between the separator 70 and at least one of the positive electrode 22 and the negative electrode 24. In addition, regarding each of the first electrode assembly 20a and the second electrode assembly 20b, a laminate number of the separators 70 in the thickness direction X (in other words, total laminate number of the first separator 70A and the second separator 70B) is equal to or more than 20 layers. In accordance with such a configuration, it is possible by the adhesion layer 74 and the separator 70 to suitably absorb load increase which could be caused when the electrode assembly 20 is expanded. By doing this, it is possible to suitably implement reducing an input-output characteristic and enhancing a Li precipitation resistant property.

Incidentally, as shown in FIG. 9, regarding the present embodiment, the separator 70 (first separator 70A, and second separator 70B) and the positive electrode 22 are adhered by the adhesion layer 74. The adhesion layer 74 herein is formed on a surface of the separator 70. Additionally, in another embodiment, the separator 70 and the negative electrode 24 might be adhered by the adhesion layer 74. Alternatively, the separator 70 and the positive electrode 22 are adhered by the adhesion layer 74 and the separator 70 and the negative electrode 24 might be adhered by the adhesion layer 74.

In addition, as shown in FIG. 9, regarding the present embodiment, the laminate number of the separators 70 on the first electrode assembly 20a is configured to be 24 layers, and the laminate number of the separators 70 on the second electrode assembly 20b is configured to be 26 layers. Here, the laminate number of the separators 70 on the electrode assembly 20 is, from a perspective of implementing easily obtaining the effect as described above, preferably equal to or more than 30, or equal to or more than 40. In addition, an upper limit of the laminate number of the separators 70 on the electrode assembly 20 might be, for example, equal to or less than 60, or equal to or less than 50. However, the present disclosure is not restricted to these examples.

The adhesion layer 74 is provided on a surface opposed to the positive electrode 22, and configured to abut on the positive electrode 22. It is preferable that the adhesion layer 74 is, as shown in FIG. 9, formed on at least a surface at the positive electrode 22 side of the separator 70. By doing this, an effect as described above can be implemented better. The adhesion layer 74 is adhered to the positive electrode 22, for example, by heating, pressing (typically, press molding), or the like. Although not particularly restricted, a thickness of the adhesion layer 74 (length in the laminate direction MD, and this meaning is similarly used, below)is preferably equal to or more than 0.1 µm, further preferably equal to or more than 0.3 µm, or furthermore preferably equal to or more than 0.5 µm. In addition, the thickness of the adhesion layer 74 is preferably equal to or less than 8 µm, or further preferably equal to or less than 5 µm.

The adhesion layer 74 herein is provided on the heat resistance layer 73. It is preferable that the adhesion layer 74 is formed on the heat resistance layer 73. The adhesion layer 74 might be provided directly on a surface of the heat resistance layer 73, or might be provided via a different layer on the heat resistance layer 73. In addition, it might be provided directly on a surface of the base material layer 72, or might be provided via a different layer from the heat resistance layer 73 on the base material layer 72. A configuration of the adhesion layer 74 is not particularly restricted, and might be similar to a conventionally known one. The adhesion layer 74 has an affinity for the electrolytic solution which is relatively higher, for example, in comparison with the heat resistance layer 73, and might be a layer swelling by absorbing the electrolytic solution. The adhesion layer 74 includes an adhesion layer binder.

As the adhesion layer binder, a conventionally known resin material having a constant viscosity for the positive electrode 22 can be used without particular restriction. As a specific example, it is possible to use a cellulose type resin, such as acrylic resin, fluorine type resin, epoxy type resin, urethane resin, ethylene-vinyl acetate resin, polyallylamine (PAA) resin, and carboxymethyl cellulose (CMC), or the like. Among them, the fluorine type resin and the acrylic resin are preferable, because they have high flexibilities and can further suitably induce the adhesive property with respect to the positive electrode 22. As the fluorine type resin, it is possible to use polyvinylidene fluoride (PVdF), polytetrafluoroethylene (PTFE), or the like. The type of the adhesion layer binder might be the same as the heat resistance layer binder, or might be different from the heat resistance layer binder. A rate of the heat resistance layer binder with respect to the total mass of the adhesion layer 74 is preferably equal to or more than 20 mass%, or is further preferably equal to or more than 50 mass%, or equal to or more than 70 mass%. By doing this, it is possible not only to precisely implement a predetermined adhesive property with respect to the positive electrode 22, but also to make the separator 70 become easily deformed by press molding.

The adhesion layer 74 might contain, in addition to the adhesion layer binder, another material (for example, inorganic filler, or the like, which are described as a component of the heat resistance layer 73). In a case where the adhesion layer 74 contains an inorganic filler, the rate of the inorganic filler with respect to the total mass of the adhesion layer 74 is preferably equal to or less than 80 mass%, further preferably equal to or less than 50 mass%, or furthermore preferably equal to or less than 30 mass%.

Although not particularly restricted, the basis weight of the adhesion layer 74 is preferably 0.005 g/m² to 1.0 g/m², or further preferably 0.02 g/m² to 0.06 g/m². Here, the basis weight (loaded volume) of the adhesion layer 74 means a value of the adhesion layer mass divided by an area size of a formation area (mass of adhesion layer/area size of formation area).

The adhesion layer 74 might be formed on a whole surface, or might have a predetermined pattern. For example, the adhesion layer, in a plane view, might have a pattern, such as dot type, stripe type, wave type, strip-like type (striated type), broken line type, mesh type, and combination of them. Particularly, regarding the adhesion layer 74, it is preferable to make the adhesion binder be PVdF and to make the pattern be the mesh type.

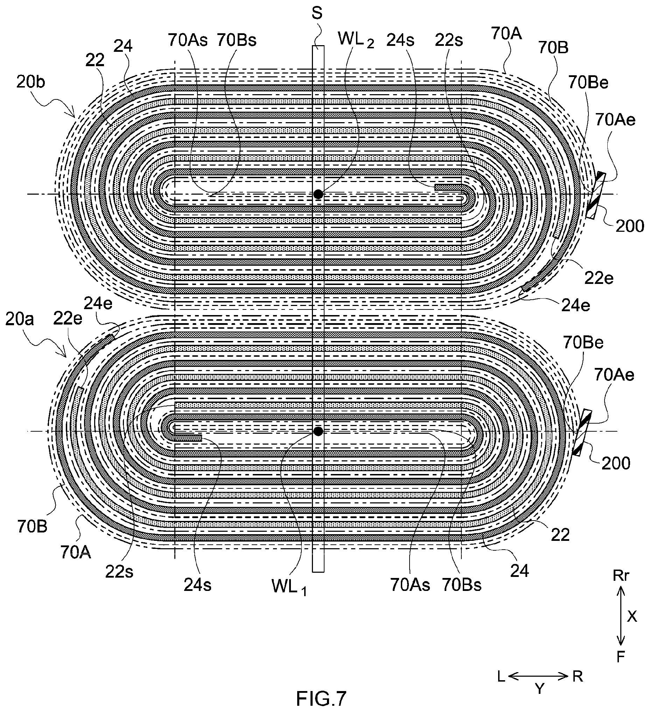

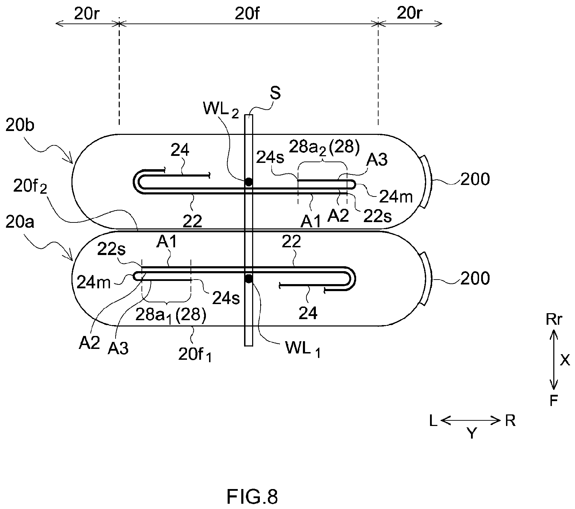

Next, arrangement aspects of the first electrode assembly 20a and the second electrode assembly 20b in accordance with the present embodiment will be described. Here, FIG. 7 is a schematic view that shows a configuration of a cross section of the electrode assembly 20 (wound electrode assembly) in FIG. 3. FIG. 8 is an explanation view that is for explaining an electrode starting-end laminate part 28 of the electrode assembly 20 (wound electrode assembly) in FIG. 7. As described above, the battery 100 is a battery including the first electrode assembly 20a and the second electrode assembly 20b, each of which is a flat-shaped wound electrode assembly with the positive electrode 22 and the negative electrode 24 wound via the separator 70, and including the battery case 10, which is configured to accommodate the first electrode assembly 20a and the second electrode assembly 20b. In addition, as shown in FIG. 8, each of the first electrode assembly 20a and the second electrode assembly 20b includes the pair of bent parts 20r, each having an outer surface being bent, and includes the flat part 20f configured to couple the pair of bent parts 20r. Then, as shown in FIG. 8, a positive electrode winding-start end part 22s includes a first area ai that elongates along the flat part 20f, and the negative electrode winding-start end part 24s includes a second area A2 that elongates along the flat part 20f, a folding part 24m that is folded from an end part of the second area A2, and a third area A3 that elongates from the end part of the folding part 24m along the flat part 20f. The electrode assembly 20 includes the electrode starting-end laminate part 28 on which the first area ai, the second area A2, and the third area A3 are overlapped, in the thickness direction X reaching from the one flat surface 20fi to the other flat surface 20f₂. Then, an electrode starting-end laminate part 28ai of the first electrode assembly and an electrode starting-end laminate part 28a₂ of the second electrode assembly are arranged to pass through the wound axis WLi of the first electrode assembly and the wound axis WL₂ of the second electrode assembly, so as to be mutually positioned at different sides with respect to a surface S along the wound axis WLi of the first electrode assembly and the wound axis WL₂ of the second electrode assembly. A length in a direction (Y direction in FIG. 7) orthogonal to the thickness direction X of the electrode starting-end laminate part 28 might be 0.5 mm to 10 mm (for example, 1 mm to 5 mm). In addition, it is preferable that the folding part 24m is folded along the bent part 20r from the end part of the second area A2.

For example, in the battery including plural wound electrode assemblies, there is a fear that expansion caused by charge and discharge induces partial increase of a cell repellent. As the result, a separator positioned at a flat part corresponding to a winding start position might become easily broken. Particularly, in a case where the winding start positions of respective electrode assemblies are overlapped in an expansion direction of the battery, an added load with respect to the separator, or the like, arranged at the winding start position tends to be increased. By doing this, a possibility is caused to reduce the input-output characteristic of the battery and to reduce the Li precipitation resistant property, or the like, and thus it is not preferable. In contrast to this, for example, regarding the herein disclosed battery 100, the electrode starting-end laminate part 28ai of the first electrode assembly and the electrode starting-end laminate part 28a₂ of the second electrode assembly are respectively arranged at different sides with respect to the surface S. In other words, when the first electrode assembly 20a and the second electrode assembly 20b are arranged in the battery case 10, it is cared about to make the electrode starting-end laminate part 28ai and the electrode starting-end laminate part 28a₂ not be overlapped in the expansion direction of the first electrode assembly 20a and the second electrode assembly 20b (here, thickness direction X in FIG. 8). In accordance with such a configuration, it is possible to suitably suppress a break of the separator 70 (first separator 70A and second separator 70B) corresponding to the winding start position. In other words, on the first electrode assembly 20a and the second electrode assembly 20b, it is possible to suppress causing an area where a balance is bad so as to induce a local increase of a press force. Thus, it is possible to solve problems as described above. In other words, according to the herein disclosed technique, it is possible to obtain the battery 100 including the plural electrode assemblies 20 (wound electrode assemblies) and having a suitably enhanced reliability.

As shown in FIG. 7, regarding the present embodiment, the winding-start end part 22s of the positive electrode is arranged at an inner side of the electrode assembly 20, and the winding-end end part 22e of the positive electrode is arranged at an outer side of the electrode assembly 20. In addition, the winding-start end part 24s of the negative electrode is arranged at the inner side of the electrode assembly 20, and the winding-end end part 24e of the negative electrode is arranged at the outer side of the electrode assembly 20. Incidentally, in FIG. 7, a reference sign 70As represents a winding-start end part of the first separator, a reference sign 70Bs represents a winding-start end part of the second separator, and a reference sign 70Be represents a winding-end end part of the second separator.

In one aspect, winding-end tapes 200, which are configured to fix the winding-end end part of the separators 70 respectively disposed on outer periphery surfaces of the first electrode assembly 20a and the second electrode assembly 20b, each is arranged on the bent part 20r. In accordance with such a configuration, it is possible, even in a case where the electrode assembly 20 is expanded, to suitably inhibit a local load from being caused at the position of the winding-end tape 200, so as to suitably suppress the Li precipitation. Particularly, in a case where the winding-end tape 200 disposed at the first electrode assembly 20a and the winding-end tape 200 disposed at the second electrode assembly 20b are arranged on the bent part 20r positioned at the same side, it is possible, in addition to the effects as described above, to decrease a size of the electrode assembly 20 in the width direction (direction Y in FIG. 2), and thus it is further preferable from a perspective of implementing easy insertion of the electrode assembly 20 into the battery case 10. Incidentally, as shown in FIG. 7, regarding the present embodiment, the winding-end tape 200 disposed at the first electrode assembly 20a and the winding-end tape 200 disposed at the second electrode assembly 20b are arranged on the bent parts 20r positioned at the same side.

As the winding-end tape 200, it is possible to use a conventionally known one utilized for this type of battery (for example, one made from a resin), without particular restriction. As one example of the winding-end tape 200, it is possible to preferably use, for example, one including a base material and including an adhesion layer formed on the base material. As one example of the base material, it is possible to use polyethylene (PE), polypropylene (PP), polyester, nylon, vinyl chloride, Teflon (registered trademark), polyimide, Kapton (registered trademark), polyphenylene sulfide, polyethylene naphthalate, or the like. A thickness of the base material, which is not particularly restricted if the effects of the herein disclosed technique are implemented, is approximately 5 µm to 100 µm, or might be, for example, 10 µm to 50 µm. In addition, as one example of a material configuring the adhesion layer, it is possible to use an acrylic adhesion material, a silicon type adhesion material, a rubber adhesion material, or the like. It is preferable that the above described adhesion layer has an adhesive property at a room temperature (typically, about 20°C). The thickness of the adhesion layer, which is not particularly restricted if the effects of the herein disclosed technique are implemented, might be approximately 5 µm to 100 µm (for example, 5 µm to 20 µm).

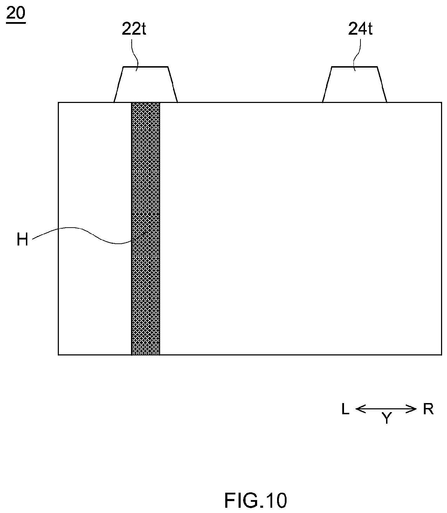

In one aspect, the electrode starting-end laminate part 28 is arranged to overlap with a tab position of any one of the positive electrode tab 22t and the negative electrode tab 24t. The electrode tabs are gathered to be formed in a bundle shape and then welded onto the electrode collecting part, and thus there is a possibility that a distance between electrodes is increased because the electrode at an electrode tab lower portion is easily bent. On the other hand, by arranging the electrode starting-end laminate part 28 at a position under the electrode tab, it is possible to apply the pressure so as to suitably hold the distance between the electrodes, and thus it is preferable from a perspective of enhancing the Li precipitation resistant property. Incidentally, as shown in FIG. 10, regarding the present embodiment, the electrode starting-end laminate part (in other words, electrode starting-end laminate part 28ai of the first electrode assembly and electrode starting-end laminate part 28a₂ of the first electrode assembly) of the electrode assembly 20 (in other words, first electrode assembly 20a and second electrode assembly 20b) is configured to overlap with the tab position of the positive electrode tab 22t (corresponding to a shaded area H of FIG. 10).

### <Manufacturing method for battery>

Next, an example of a manufacturing method of the battery 100 will be described. Regarding a manufacture for the electrode assembly 20, at first, the first separator 70A, the positive electrode 22, the second separator 70B, and the negative electrode 24 are prepared. Then, a winding roller is used to wind each of members. After that, by pressing a wound body with a predetermined pressure and by imparting the winding-end tape 200 onto the winding-end end part 70Ae of the first separator, it is possible to obtain the electrode assembly 20. Here, in the present embodiment, for arranging on the bent parts 20r at the same side, the winding-end tape 200 disposed at the first electrode assembly 20a and the winding-end tape 200 disposed at the second electrode assembly 20b are wound on an outermost periphery of the second electrode assembly 20b more than on the first electrode assembly 20a by one lap amount. Two electrode assemblies manufactured as described above are inserted into the outer package 12 in a state of being joined to the electrode collecting member on which an electrode tab group is attached to the sealing plate 14, and then the outer package 12 and the sealing plate 14 are joined (welded), so as to construct the battery case 10. Then, the electrolyte is injected from the liquid injection hole 15 of the sealing plate 14 to an inside of the battery case 10, and then the liquid injection hole 15 is covered with the sealing member 16. As described above, it is possible to manufacture the battery 100.

Although the battery 100 can be used for various purposes, it can be suitably used, for example, as a power source for motor (power supply for driving) mounted on a vehicle, such as passenger car and truck. Although a type of the vehicle is not particularly restricted, it is possible to apply the battery to, for example, a plug-in hybrid vehicle (PHEV; Plug-in Hybrid Electric Vehicle), a hybrid vehicle (HEV; Hybrid Electric Vehicle), an electric vehicle (BEV; Battery Electric Vehicle), or the like.

Above, some embodiments of the present disclosure are explained, but the above described embodiments are merely examples. The present disclosure can be implemented in various other forms. The present disclosure can be executed based on the contents disclosed in the present specification, and the technical common sense in the present field. The technique recited in the appended claims includes variously deformed or changed versions of the embodiments that have been illustrated above. For example, one part of the above described embodiment can be replaced with another deformed aspect, and furthermore another deformed aspect can be added to the above described embodiment. In addition, unless a technical feature is explained to be essential, this technical feature can be appropriately deleted.

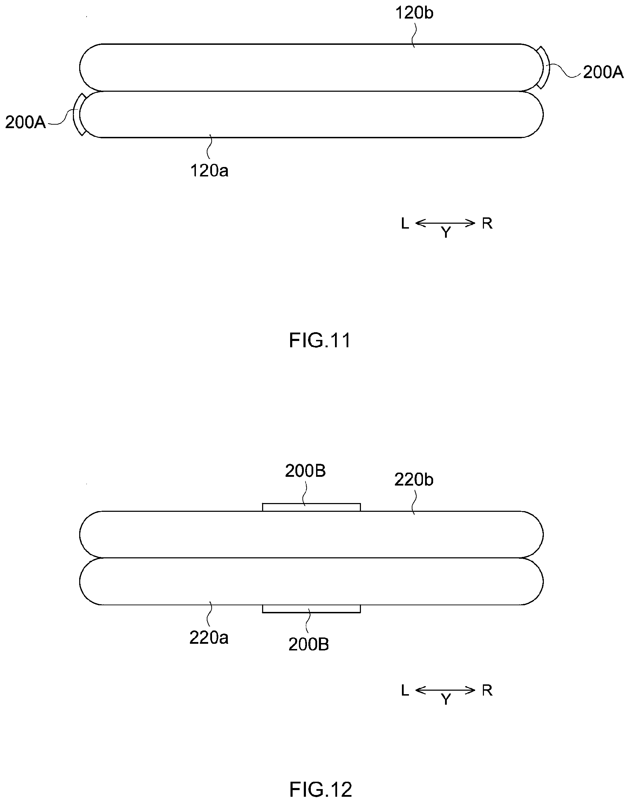

For example, in the embodiment, although the winding-end tape 200 disposed at the first electrode assembly 20a and the winding-end tape 200 disposed at the second electrode assembly 20b are arranged on the bent parts 20r at the same side, the present disclosure is not restricted to this example. For example, FIG. 11 is an explanation view that is for explaining arrangement position of the winding-end tape in accordance with another embodiment. As shown in FIG. 11, regarding another embodiment, a winding-end tape 200A disposed at the first electrode assembly 120a and a winding-end tape 200A disposed at the second electrode assembly 120b might be on the bent parts at different sides. In accordance with such a configuration, for example, when the battery is vibrated in the width direction (direction Y in FIG. 11), the winding-end tape 200A works as a buffering material, and thus it is possible to suitably inhibit the damage on the electrode assembly 120. In addition, a wound number of the first electrode assembly 120a and a wound number of the second electrode assembly 120b become the same, and thus it is possible to implement the same battery capacity.

For example, in the above described embodiment, although the winding-end tape 200 disposed at the first electrode assembly 20a and the winding-end tape 200 disposed at the second electrode assembly 20b are arranged on the bent parts 20r at the same side, the present disclosure is not restricted to this example. For example, FIG. 12 is an explanation view that is for explaining an arrangement position of the winding-end tape in accordance with another embodiment. As shown in FIG. 12, regarding another embodiment, a winding-end tape 200B disposed at the first electrode assembly 220a and a winding-end tape 200B disposed at the second electrode assembly 220b might be arranged on flat parts positioned at different sides. In accordance with such a configuration, by making a central part of the electrode assembly 220 be pressurized, a nonuniformity of the distance between electrodes in the width direction (direction Y in FIG. 12) becomes smaller, it is possible to enhance the input-output characteristic of the electrode assembly 220 and enhance the Li precipitation resistant property, and therefore it is preferable. In addition, by strongly pushing the electrode assembly 220 into the battery case in the thickness direction X, it is possible to fix the position of the electrode assembly 220, and thus it is possible to suitably inhibit the electrode tabs from being broken and the electrode assembly 220 from being damaged even when the battery case is vibrated. In addition, by making the winding-end tape 200B be arranged at the outer side of the electrode assembly 220, the insulation sheet becomes creeping so as to mitigate bending.

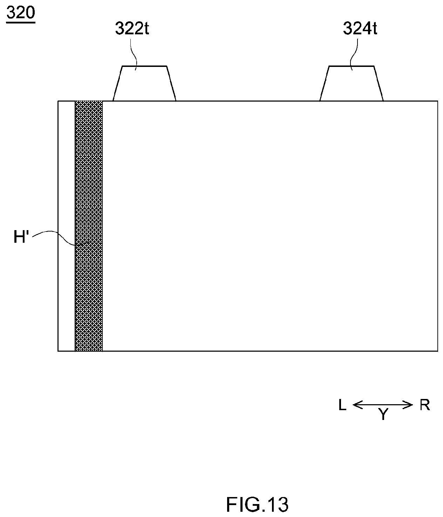

For example, in the above described embodiment, the electrode starting-end laminate part 28 of the electrode assembly 20 is configured to overlap with the tab position of the positive electrode tab 22t, but the present disclosure is not restricted to this example. For example, FIG. 13 is a FIG. 10 corresponding diagram in accordance with another embodiment. As shown in FIG. 13, regarding another embodiment, the electrode starting-end laminate part of the electrode assembly 320 might be arranged at an outer side more than the tab position of any one of the positive electrode tab 322t and the negative electrode tab 324t (here, positive electrode tab 322t) in a direction (direction Y in FIG. 13) orthogonal to the thickness direction X (which corresponds to a shaded area H' in FIG. 13). In accordance with such a configuration, it is possible to delete a negative electrode area which is hardly related to charge and discharge, and to suitably increase the battery capacity, and thus it is preferable. In addition, the electrode tabs disposed closer to the center part of the wound structure can induce more suitably dispersing a current density, and thus it is possible to suitably suppress the Li precipitation.

For example, in the above described embodiment, the configuration of the first electrode assembly 20a and the configuration of the second electrode assembly 20b are different in the wound number, but in another embodiment, the configuration of the first electrode assembly 20a and the configuration of the second electrode assembly 20b might be the same.

For example, in the above described embodiment, with respect to the wound axis direction WD, the positive electrode tab 22t and the negative electrode tab 24t are provided on the end parts at the same side, but the present disclosure is not restricted to this example. The herein disclosed technique can be applied to a battery including a wound electrode assembly in which the positive electrode tab and the negative electrode tab are provided on the end parts at the different sides from each other with respect to the wound axis direction WD. Alternatively, the herein disclosed technique can be applied to a battery including a wound electrode assembly in which the positive electrode tab 22t and the negative electrode tab 24t are not provided.

For example, in the above described embodiment, the adhesion layers 74 are formed on a surface of the first separator 70A and a surface of the second separator 70B, but the present disclosure is not restricted to this example. For example, the adhesion layer 74 might be formed on a surface of the positive electrode 22 or on a surface of the negative electrode 24. Here, the wording "surface of the positive electrode (negative electrode)" might mean a surface of the positive electrode active material layer 22a (negative electrode active material layer 24a), or might mean a surface of the positive electrode collecting body 22c (negative electrode collecting body 24c). In the case where the adhesion layer 74 is provided on the surface of the positive electrode 22 (negative electrode 24), it is preferable that the positive electrode 22 (negative electrode 24) includes the positive electrode active material layers 22a (negative electrode active material layers 24a) on the both surfaces of the positive electrode collecting body 22c (negative electrode collecting body 24c), and includes the adhesion layer 74 on the surface of this positive electrode active material layer 22a (this negative electrode active material layer 24a).

For example, in the above described embodiment, two electrode assemblies 20 are arranged in the battery case 10, but the present disclosure is not restricted to this example. In another embodiment, more than 2 electrode assemblies 20 might be arranged in the battery case 10. In this case, it is sufficient that the herein disclosed technique is applied on at least 2 electrode assemblies 20 among the plural electrode assemblies 20 arranged in the battery case 10. For example, in a case where three electrode assemblies 20 are arranged in the battery case 10, positions of the electrode starting-end laminate parts 28 of the three electrode assemblies 20 might be configured to be alternately different from each other with respect to the surface S. Alternatively, if three electrode assemblies 20 arranged in the thickness direction X are referred to as the first electrode assembly, the second electrode assembly, and the third electrode assembly in this order, it might be configured that the position of the electrode starting-end laminate part 28 of the first electrode assembly and the position of the electrode starting-end laminate part of the third electrode assembly are arranged differently with respect to the surface S and the position of the electrode starting-end laminate part 28 of the first electrode assembly and the position of the electrode starting-end laminate part of the second electrode assembly are arranged the same with respect to the surface S. Then, for example, in a case where four electrode assemblies 20 are arranged in the battery case 10, the positions of the electrode starting-end laminate parts 28 of the four electrode assemblies 20 might be configured to be alternately different from each other with respect to the surface S. In addition, if four electrode assemblies 20 arranged in the thickness direction X are referred to as the first electrode assembly, the second electrode assembly, the third electrode assembly, and the fourth electrode assembly in this order, it might be configured that the position of the electrode starting-end laminate part 28 of the first electrode assembly and the position of the electrode starting-end laminate part of the fourth electrode assembly are arranged differently with respect to the surface S, and the position of the electrode starting-end laminate part 28 of the second electrode assembly and the position of the electrode starting-end laminate part of the third electrode assembly are arranged the same with respect to the surface S. Alternatively, it might be configured that the position of the electrode starting-end laminate part 28 of the second electrode assembly and the position of the electrode starting-end laminate part of the third electrode assembly are arranged differently with respect to the surface S, and the position of the electrode starting-end laminate part 28 of the first electrode assembly and the position of the electrode starting-end laminate part of the fourth electrode assembly are arranged the same with respect to the surface S. However, it is not intended that the positions of the electrode starting-end laminate parts 28 of the plural electrode assemblies 20 are restricted to these examples.

For example, in the above described embodiment, the wound directions of the first electrode assembly 20a and the second electrode assembly 20b are configured to be the same, but the present disclosure is not restricted to this example. In another embodiment, the wound directions of the first electrode assembly 20a and the second electrode assembly 20b might be configured to be different from each other.

For example, in the above described embodiment, with respect to the wound axis direction WD, the positive electrode tab 22t and the negative electrode tab 24t are provided on the end parts at the same side, but the present disclosure is not restricted to this example. The herein disclosed technique can be applied to a battery including a wound electrode assembly in which the positive electrode tab and the negative electrode tab are provided on the end parts respectively positioned at different sides with respect to the wound axis direction WD. Alternatively, the herein disclosed technique can be applied to a battery including a wound electrode assembly on which the positive electrode tab 22t and the negative electrode tab 24t are not formed.

For example, in the above described embodiment, the winding-end tape is imparted on the winding-end end part of the separator positioned at the outermost surface of the wound electrode assembly, but the present disclosure is not restricted to this example. The herein disclosed technique can be applied to a battery on which the winding-end tape is not imparted. In that case, it is preferable that the adhesion layer is formed on an inner side surface at the winding-end end part vicinity of the separator positioned on the outermost surface of the wound electrode assembly. By doing this, it is possible to suitably fix the winding-end end part of the separator onto the wound electrode assembly.

As described above, regarding particular aspects of the herein disclosed technique, it is possible to recite each of items described below.

Item 1: A battery comprising: a first electrode assembly and a second electrode assembly, each being a flat shaped wound electrode assembly in which a positive electrode and a negative electrode are wound via a separator; and a battery case configured to accommodate the first electrode assembly and the second electrode assembly, wherein each of the first electrode assembly and the second electrode assembly comprises: a pair of bent parts, each having an outer surface being bent; and a flat part configured to couple the pair of bent parts, a positive electrode winding-start end part comprises a first area elongating along the flat part, a negative electrode winding-start end part comprises: a second area elongating along the flat part; a folding part being folded from an end part of the second area; and a third area elongating from an end part of the folding part along the flat part, an electrode starting-end laminate part is provided where the first area, the second area, and the third area are overlapped in a thickness direction reaching from one flat surface of the wound electrode assembly to the other flat surface, and the electrode starting-end laminate part of the first electrode assembly and the electrode starting-end laminate part of the second electrode assembly are arranged to pass through a wound axis of the first electrode assembly and a wound axis of the second electrode assembly, and mutually arranged at different sides with respect to a surface being along the wound axis of the first electrode assembly and the wound axis of the second electrode assembly.

Item 2: The battery described in item 1, wherein any of winding-end tapes configured to fix winding-end end parts of the separators disposed on outer periphery surfaces of the first electrode assembly and the second electrode assembly are arranged on the bent parts.

Item 3: The battery described in item 2, wherein the winding-end tape disposed on the first electrode assembly and the winding-end tape disposed on the second electrode assembly are arranged on the bent parts positioned at the same side.

Item 4: The battery described in any one of item 1 to item 3, wherein the battery case comprises a first surface on which a liquid injection hole is formed, and the first electrode assembly and the second electrode assembly are arranged in the battery case so as to make a wound axis of the first electrode assembly and a wound axis of the second electrode assembly be respectively arranged in directions perpendicular to the first surface.

Item 5: The battery described in any one of item 1 to item 4, wherein an adhesion layer is formed between the separator and at least one of the positive electrode and the negative electrode, and on each of the first electrode assembly and the second electrode assembly, a laminate number of the separator in the thickness direction is equal to or more than 20 layers.

Item 6: The battery described in any one of item 1 to item 5, wherein the electrode starting-end laminate part is overlapped with a tab position of any one of a positive electrode tab and a negative electrode tab.

Item 7: The battery described in any one of item 1 to item 6, wherein the electrode starting-end laminate part is arranged at an outer side more than a tab position of any one of a positive electrode tab and a negative electrode tab in a direction orthogonal to the thickness direction.

## Claims

1. A battery (100) comprising:
a first electrode assembly (20a) and a second electrode assembly (20b), each being a flat shaped wound electrode assembly (20) in which a positive electrode (22) and a negative electrode (24) are wound via a separator (70); and
a battery case (10) configured to accommodate the first electrode assembly (22c) and the second electrode assembly (24c), **characterized in that**
each of the first electrode assembly (20a) and the second electrode assembly (20b) comprises:
a pair of bent parts (20r), each having an outer surface being bent; and
a flat part (20f) configured to couple the pair of bent parts,
a positive electrode winding-start end part (22s) comprises a first area elongating along the flat part,
a negative electrode winding-start end part (24s) comprises:
a second area elongating along the flat part;
a folding part (24m) being folded from an end part of the second area; and
a third area elongating from an end part (24m) of the folding part along the flat part,
an electrode starting-end laminate part (28) is provided where the first area, the second area, and the third area are overlapped in a thickness direction reaching from one flat surface of the wound electrode assembly (20) to the other flat surface, and
the electrode starting-end laminate part (28ai) of the first electrode assembly and the electrode starting-end laminate part (28a₂) of the second electrode assembly are arranged to pass through a wound axis of the first electrode assembly and a wound axis of the second electrode assembly, and mutually arranged at different sides with respect to a surface being along the wound axis of the first electrode assembly and the wound axis of the second electrode assembly.

2. The battery according to claim 1, wherein
any of winding-end tapes (200) configured to fix winding-end end parts of the separators disposed on outer periphery surfaces of the first electrode assembly and the second electrode assembly are arranged on the bent parts (20r).

3. The battery according to claim 2, wherein
the winding-end tape (200) disposed on the first electrode assembly and the winding-end tape (200) disposed on the second electrode assembly are arranged on the bent parts (20r) positioned at the same side.

4. The battery according to any one of claims 1 to 3, wherein
the battery case (100) comprises a first surface on which a liquid injection hole (15) is formed, and
the first electrode assembly (20a) and the second electrode assembly (20b) are arranged in the battery case (100) so as to make a wound axis of the first electrode assembly and a wound axis of the second electrode assembly be respectively arranged in directions perpendicular to the first surface.

5. The battery according to any one of claims 1 to 4, wherein
an adhesion layer (74) is formed between the separator (70) and at least one of the positive electrode (22) and the negative electrode (24), and
on each of the first electrode assembly (20a) and the second electrode assembly (20b), a laminate number of the separator (70) in the thickness direction is equal to or more than 20 layers.

6. The battery according to any one of claims 1 to 5, wherein
the electrode starting-end laminate part (28) is overlapped with a tab position of any one of a positive electrode tab (22t) and a negative electrode tab (24t).

7. The battery according to any one of claims 1 to 6, wherein
the electrode starting-end laminate part is arranged at an outer side more than a tab position of any one of a positive electrode tab (22t) and a negative electrode tab (24t) in a direction orthogonal to the thickness direction.
